# EUROPÄISCHE PATENTANMELDUNG

(11) **EP 3 517 799 A1**
(43) Veröffentlichungstag der Anmeldung: **31.07.2019**
(21) Anmeldenummer: 19153741.4
(22) Anmeldetag: 25.01.2019
(51) Int. Cl.: F16F 1/368, F16F 1/42, F16F 1/13

(54) **BIEGEFEDERELEMENT AUS FASERKUNSTSTOFFVERBUNDMATERIAL**

(30) Priorität: 25.01.2018 DE 102018101736
(71) Anmelder: DANTO Invention GmbH & Co. KG, 64589 Stockstadt am Rhein (DE)
(72) Erfinder: Keller, Tobias, 67596 Dittelsheim-Heßloch (DE)
(74) Vertreter: Habermann Intellectual Property Partnerschaft von Patentanwälten mbB

(57) **Zusammenfassung**

Ein Biegefederelement (1) mit einem Federkern (2) aus Faserkunststoffverbundmaterial weist mindestens abschnittsweise eine Umhüllung (7) aus einem Umhüllungsmaterial auf, dessen Elastizitätsmodul geringer als der Elastizitätsmodul des Faserkunststoffverbundmaterials ist. Der Elastizitätsmodul des Umhüllungsmaterials beträgt vorzugsweise weniger als 5 % und besonders vorzugsweise weniger als 1 % des Elastizitätsmoduls des Faserkunststoffverbundmaterials. Das Umhüllungsmaterial kann ein Kunststoffschaum und vorzugsweise ein Polyurethan-Schaum sein. Das Umhüllungsmaterial kann ein offenporiger oder ein geschlossenporiger Kunststoffschaum sein. Das Biegefederelement (1) weist optional mindestens zwei in entgegengesetzter Richtung verlaufende Federschenkelabschnitte (3) auf, die über einen dazwischen angeordneten Umlenkungsbereich (4) verbunden sind, in welchem sich der Verlauf des Biegefederelements (1) verändert, sodass ein mäanderförmiges Biegefederelement (1) gebildet wird. Ein Zwischenraum zwischen zwei in entgegengesetzter Richtung verlaufenden Federschenkelabschnitten (3) ist vollständig mit dem Umhüllungsmaterial ausgefüllt ist, sodass ein unerwünschtes Eindringen von Partikeln in diesen Zwischenraum verhindert werden kann.

## Beschreibung

Die Erfindung betrifft ein Biegefederelement mit einem Federkern aus Faserkunststoffverbundmaterial.

Biegefederelemente aus Faserkunststoffverbundmaterial weisen im Vergleich zu Biegefederelementen aus Metall zahlreiche vorteilhafte Eigenschaften auf. Ein für viele Anwendungen interessanter Vorteil ist das geringe Eigengewicht eines Biegefederelements aus Faserkunststoffverbundmaterial, welches bei vergleichbaren Federeigenschaften deutlich leichter als ein Biegefederelement aus Metall mit vergleichbaren Federeigenschaften sein kann. Nicht nur aus diesem Grund werden Biegefederelemente aus Faserkunststoffverbundmaterial zunehmend auch im Fahrzeugbau eingesetzt.

Es hat sich gezeigt, dass insbesondere bei langen Nutzungsdauern in anspruchsvollen Umgebungsbedingungen ein Biegefederelement aus Faserkunststoffverbundmaterial aufgrund von verschiedenen Ursachen einer hohen Beanspruchung ausgesetzt sein kann, die gegebenenfalls sogar zu einer Beschädigung oder zu einem Versagen des Biegefederelements führen kann. Die mechanische Stabilität des Faserkunststoffverbunds kann beispielsweise durch Steinschlag, Verschmutzung oder anhaftende Eispartikel beeinträchtigt werden. Bei vielen Kunststoffmaterialien ist auch eine länger andauernde Exposition gegenüber UV-Licht schädlich, wie es beispielsweise bei natürlicher Sonneneinstrahlung anteilig enthalten ist.

Insbesondere beim Fahrzeugbau, jedoch auch bei anderen Einsatzmöglichkeiten, die eine Verwendung eines derartigen Biegefederelements in anspruchsvollen Umgebungsbedingungen vorsehen, werden deshalb zusätzliche Maßnahmen getroffen, um das Biegefederelement vor einer übermäßigen Beanspruchung zu schützen. So wird beispielsweise beim Fahrzeugbau ein Biegefederelement aus Faserkunststoffverbundmaterial nach Möglichkeit durch ein umgebendes Gehäuse weitgehend abgeschirmt von Schmutz und Nässe sowie von eventuell einfallender Lichtstrahlung angeordnet. Dadurch wird ein zusätzlicher konstruktiver Aufwand erforderlich. Gleichzeitig werden die Nutzungsmöglichkeiten eines derartigen Biegefederelements eingeschränkt.

Es wird deshalb als eine Aufgabe der vorliegenden Erfindung angesehen, ein Biegefederelement der eingangs genannten Gattung so auszugestalten, dass das Biegefederelement mit möglichst einfachen Mitteln möglichst effektiv vor Umgebungseinflüssen geschützt ist.

Diese Aufgabe wird erfindungsgemäß dadurch gelöst, dass das Faserkunststoffverbundmaterial mindestens abschnittsweise eine Umhüllung aus einem Umhüllungsmaterial aufweist, dessen Elastizitätsmodul geringer als der Elastizitätsmodul des Faserkunststoffverbundmaterials ist. Durch die Umhüllung aus einem Umhüllungsmaterial wird das Faserkunststoffverbundmaterial des Biegefederelements von Umgebungseinflüssen abgeschirmt. Die Umhüllung kann verhindern, dass Partikel oder einfallendes UV-Licht mit dem Faserkunststoffverbundmaterial in Kontakt kommen. Durch eine geeignete Wahl des Umhüllungsmaterials kann auch erreicht werden, dass das Faserkunststoffverbundmaterial vor Wasser und eindringender Feuchtigkeit geschützt wird. Da der Elastizitätsmodul des Umhüllungsmaterials geringer und vorzugsweise deutlich geringer als der Elastizitätsmodul des Faserkunststoffverbundmaterials ist, werden durch die Umhüllung die Federeigenschaften des Faserkunststoffverbundmaterials und damit die Federeigenschaften des Biegefederelements nicht merklich beeinflusst.

Die Umhüllung kann beispielsweise aus einem flexiblen textilen Material bestehen. Es ist ebenfalls möglich, dass die Umhüllung aus einem geeigneten Kunststoffmaterial hergestellt ist. Die Umhüllung kann lösbar an dem Faserkunststoffverbundmaterial angeordnet sein. Es ist ebenfalls denkbar und für viele Anwendungsbereiche vorteilhaft, dass die Umhüllung dauerhaft an dem Faserkunststoffverbundmaterial angeordnet und mit diesem verbunden ist.

Im Hinblick auf eine möglichst geringe Beeinflussung der angestrebten Federeigenschaften des Biegefederelements ist es optional vorgesehen, dass der Elastizitätsmodul des Umhüllungsmaterials weniger als 5 % und vorzugsweise weniger als 1 % des Elastizitätsmoduls des Faserkunststoffverbundmaterials beträgt.

Einer Ausgestaltung des Erfindungsgedankens zufolge ist vorgesehen, dass das Umhüllungsmaterial ein Kunststoffschaum ist. Es sind verschiedene Kunststoffmaterialien bekannt, die kostengünstig hergestellt und aufgeschäumt werden können. Ein geeignetes Kunststoffmaterial ist möglichst lichtundurchlässig, beziehungsweise undurchlässig gegenüber UV-Licht und bewirkt einen möglichst effizienten Schutz vor mechanischen Einflüssen und Beanspruchungen. Es sind verschiedene Kunststoffmaterialien bekannt, die dauerhaft den beispielsweise bei Fahrzeugen üblicherweise auftretenden Beanspruchungen des Biegefederelements und den üblicherweise vorherrschenden Umgebungsbedingungen standhalten können.

Ein geeigneter Kunststoffschaum weist ein sehr geringes Eigengewicht auf, so dass auch bei einer voluminösen Umhüllung des Faserkunststoffverbundmaterials das Gesamtgewicht des Biegefederelements nicht merklich erhöht wird.

Gemäß einer Ausgestaltung des Erfindungsgedankens ist vorgesehen, dass das Umhüllungsmaterial ein offenporiger Kunstschaumstoff ist. Ein offenporiger Kunststoffschaum kann ein sehr kleines Elastizitätsmodul aufweisen und sehr leicht verformbar sein.

Vorzugsweise ist vorgesehen, dass das Umhüllungsmaterial ein geschlossenporiger Kunstschaumstoff ist. Ein geschlossenporiger Kunstschaumstoff kann wasserabweisend ausgebildet sein, da die geschlossenen Poren des Kunstschaumstoffs kein Wasser und auch keine Feuchtigkeit aufnehmen. Im Hinblick auf ein möglichst geringes Eigengewicht und eine leichte Verformbarkeit, durch welche die Eigenschaften des Biegefederelements nicht nachteilig beeinflusst werden, ist es zweckmäßig, dass der Kunststoffschaum möglichst große Poren mit einem mittleren Porendurchmesser von mehr als 1 mm, vorzugsweise von mehr als 2 mm oder sogar von mehr als 5 mm aufweist.

Es ist gemäß einer vorteilhaften Ausgestaltung des Erfindungsgedankens auch möglich, dass das Umhüllungsmaterial ein Polyurethan-Schaum oder ein Polyurethan-Gel ist. Polyurethan als wesentliche Komponente der Umhüllung weist verschiedene vorteilhafte Eigenschaften auf. Ein Polyurethan-Schaum oder ein Polyurethan-Gel lassen sich kostengünstig herstellen und einfach verarbeiten beziehungsweise in einfacher Weise dauerhaft mit dem Kunststofffaserverbundmaterial des Biegefederelements verbinden.

Es ist optional vorgesehen, dass das Biegefederelement mindestens zwei in entgegengesetzter Richtung verlaufende Federschenkelabschnitte aufweist, die über einen dazwischen angeordneten Umlenkungsbereich verbunden sind, in welchem sich der Verlauf des Biegefederelements verändert, so dass ein mäanderförmiges Biegefederelement gebildet wird. Im Vergleich mit einem stabförmigen oder S-förmigen Biegefederelement kann ein derart ausgebildetes mäanderförmiges Biegefederelement auf einen vergleichsweise kleinen Bauraum beschränkt sein und dennoch eine hohe Federwirkung erzeugen. Derart ausgestaltete Biegefederelemente können beispielsweise als Federelemente einer Radaufhängung eines Kraftfahrzeugs verwendet werden.

Ein derartiges Biegefederelement kann auch drei oder vier oder deutlich mehr Federschenkelabschnitte aufweisen, die jeweils in entgegengesetzter Richtung verlaufen. Zwei benachbart angeordnete Federschenkelabschnitte können dabei parallel oder näherungsweise parallel zueinander ausgerichtet sein. Es ist ebenfalls denkbar, dass zwei benachbarte Federschenkelabschnitte einen spitzen Winkel einschließen, der im Falle eines näherungsweise parallelen Verlaufs nur wenige Grad groß ist, aber je nach Ausgestaltung und Anforderung des Biegefederelements auch deutlich mehr als zwanzig oder dreißig Grad betragen kann.

Einer ganz besonders vorteilhaft erachteten Ausgestaltung des Erfindungsgedankens zufolge ist vorgesehen, dass ein Zwischenraum zwischen zwei in entgegengesetzter Richtung verlaufenden Federschenkelabschnitten vollständig mit dem Umhüllungsmaterial ausgefüllt ist, so dass ein unerwünschtes Eindringen von Partikeln in diesen Zwischenraum verhindert werden kann. Während das Faserkunststoffverbundmaterial im Wesentlichen mäanderförmig ausgebildet ist, kann die umgebende Umhüllung eine näherungsweise quaderförmige Formgebung aufweisen. Auf diese Weise kann ausgeschlossen werden, dass größere Partikel in einen Zwischenraum zwischen zwei entgegengesetzt verlaufende Federschenkelabschnitte eindringen und bei einer bestimmungsgemäßen Verformung des Biegefederelements, wobei sich die benachbarten Federschenkelabschnitte annähern und möglicherweise sogar in Kontakt kommen, zwischen einander zugewandten Oberflächen der Federschenkelabschnitte eingeklemmt werden und punktuell große mechanische Belastungsspitzen erzeugen, wenn die Federschenkelabschnitte aneinander angedrückt werden. Das Problem kann durch eine geeignete Formgebung einer den Umgebungsbedingungen ausgesetzten Oberfläche der Umhüllung weitgehend reduziert werden, um auch eine Beeinträchtigung des Umhüllungsmaterials durch Schmutz oder Nässe möglichst gering zu halten.

Zusätzlich kann gemäß einer Ausgestaltung des Erfindungsgedankens vorgesehen sein, dass an der Biegefeder mehrere Federverstärkungselemente derart angeordnet sind, dass sich bei einer bestimmungsgemäßen Verformung des Biegefederelements die Federkraft erhöht. Auf diese Weise kann mit geeignet ausgestalten und angeordneten Federverstärkungselementen erreicht werden, dass eine durch das Faserkunststoffverbundmaterial und dessen Formgebung vorgegebene Kennlinie des Biegefederelements in vorteilhafter Weise beeinflusst werden kann. So können die Federverstärkungselemente beispielsweise derart angeordnet sein, dass sich die Federkraft erst verändert und erhöht, nachdem das Biegefederelement über einen Schwellenwert hinaus verformt ist. Auf diese Weise lassen sich mit einfachen konstruktiven Maßnahmen komplexe und insbesondere bei einer Verwendung in Fahrzeugen vorteilhafte Federkennlinien für ein erfindungsgemäßes Biegefederelement vorgeben.

Gemäß einer Ausgestaltung des Erfindungsgedankens ist vorgesehen, dass das Umhüllungsmaterial mehrere Bereiche mit einem höheren Elastizitätsmodul aufweist, wobei die mehreren Bereiche mit einem höheren Elastizitätsmodul jeweils ein Federverstärkungselement bilden. Die Bereiche mit einem höheren Elastizitätsmodul können dabei in vorteilhafter Weise zusätzlich von einem Umhüllungsmaterial mit einem geringeren Elastizitätsmodul umgeben sein und dadurch ebenfalls von möglicherweise beanspruchenden Umgebungsbedingungen abgeschirmt werden. Es sind Umhüllungsmaterialien sowie Herstellungs-, beziehungsweise Verarbeitungsmethoden bekannt, die eine Umhüllung des Faserkunststoffverbundmaterials mit Bereichen mit einem höheren Elastizitätsmodul sowie mit einem Umhüllungsmaterial mit einem geringeren Elastizitätsmodul in einem einheitlichen Verarbeitungsschritt ermöglichen.

Es ist ebenfalls denkbar, dass die Federverstärkungselemente aus einem gesonderten Material und in einem gesonderten Herstellungsverfahren hergestellt und nachträglich mit dem Kunststofffaserverbundmaterial verbunden werden. Das Umhüllungsmaterial mit einem geringen Elastizitätsmodul kann anschließend aufgebracht werden und entweder nur die freiliegenden Oberflächen des Faserkunststoffverbundmaterials oder aber auch die daran angeordneten Federverstärkungselemente umhüllen.

In vorteilhafter Weise ist optional vorgesehen, dass mindestens an zwei in entgegengesetzter Richtung verlaufenden Federschenkelabschnitten jeweils mindestens ein Federverstärkungselement so angeordnet ist, dass bei einer bestimmungsgemäßen Verformung des Biegefederelements die einander zugeordneten Federverstärkungselemente an einander zugeordneten Federschenkelabschnitten aneinander anliegen und die Federkraft bei einer weiteren Verformung des Biegefederelements erhöhen. Durch die aneinander anliegenden und von den benachbarten Federschenkelabschnitten zusammengedrückten Federverstärkungselemente kann die Federkraft des Biegefederelements merklich erhöht werden, sobald die einander zugewandten Federverstärkungselemente bei einem Zusammendrücken des Biegefederelements miteinander in Kontakt kommen und aneinander anliegen. Die Federverstärkungselemente können dabei je nach Material und Formgebung eine kontinuierlich zunehmende oder aber auch eine sprunghaft ansteigende Federkraft erzeugen.

In gleicher Weise kann optional ebenfalls vorgesehen sein, dass mindestens an zwei bei einer bestimmungsgemäßen Verformung des Biegefederelements benachbarten Umlenkungsbereichen jeweils ein Federverstärkungselement so angeordnet ist, dass bei einer bestimmungsgemäßen Verformung des Biegefederelements die einander zugeordneten Federverstärkungselemente an benachbarten Umlenkungsbereichen aneinander anliegen und die Federkraft bei einer weiteren Verformung des Biegefederelements erhöhen. Es ist dabei weitgehend beliebig möglich, die Federverstärkungselemente entweder im Bereich der Federschenkelabschnitte oder im Bereich der Umlenkungsbereiche anzuordnen. Es ist auch ein regelmäßiger oder unregelmäßiger Wechsel der Anordnung der einzelnen Federverstärkungselemente denkbar.

Im Hinblick auf eine möglichst große Erhöhung der Federkraft durch die Federverstärkungselemente ist es gemäß einer Ausgestaltung des Erfindungsgedankens vorgesehen, dass das Biegefederelement mehr als zwei jeweils zueinander in entgegengesetzter Richtung verlaufende Federschenkelabschnitte aufweist, und dass die an den Federschenkelabschnitten und/oder an den Umlenkungsbereichen angeordneten Federverstärkungselemente in einer Verformungsrichtung jeweils überlappend oder deckungsgleich angeordnet sind, sodass bei einer ausreichenden Verformung des Biegefederelements die längs der Verformungsrichtung angeordneten Federverstärkungselemente unterbrechungsfrei aneinander anliegen. Auf diese Weise wird die Federkraft des Biegefederelements nicht nur durch jeweils zwei einander zugeordnete Federverstärkungselemente beeinflusst, die in Abhängigkeit von der Verformung des Biegefederelements in Kontakt treten und die Federkraft erhöhen, sondern eine Verbundwirkung mehrerer Federverstärkungselemente ermöglicht, die in der Verformungsrichtung entlang einer Linie bzw. zumindest teilweise überlappend angeordnet sind und einen durch die Federverstärkungselemente hindurch wirkenden Kraftschluss bewirken, der bei einer weiteren Verformung des Biegefederelements die dadurch erzeugte Federkraft maßgeblich dominiert.

Nachfolgend werden verschiedene Ausführungsbeispiele des Erfindungsgedankens näher erläutert, die in der Zeichnung exemplarisch dargestellt sind. Es zeigt:
Figur 1 eine Schnittansicht eines erfindungsgemäßen Biegefederelements, bei welchem ein Faserkunststoffverbundmaterial im Wesentlichen vollständig von einer Umhüllung aus einem Umhüllungsmaterial umgeben ist,
Figur 2 eine Schnittansicht des in Figur 1 dargestellten Biegefederelements längs einer Linie II-II in Figur 1,
Figur 3 eine Schnittansicht gemäß Figur 1 des erfindungsgemäßen Biegefederelements, wobei das Biegefederelement durch eine äußere Krafteinwirkung längs einer Verformungsrichtung zusammengedrückt ist,
Figur 4 eine Schnittansicht des in Figur 3 dargestellten Biegefederelements längs einer Linie IV-IV in Figur 3,
Figur 5 eine schematische Ansicht eines in den Figuren 1 bis 4 dargestellten Biegefederelements, welches zwischen zwei einander gegenüberliegend angeordneten Lagern eingespannt ist,
Figur 6 eine Schnittansicht eines abweichend ausgestalteten Biegefederelements, bei welchem zusätzlich zu der Umhüllung in Umlenkungsbereichen des Biegefederelements Federverstärkungselemente angeordnet sind, die ein höheres Elastizitätsmodul als das Umhüllungsmaterial aufweisen,
Figur 7 eine Schnittansicht des in Figur 6 dargestellten Biegefederelements längs einer Linie VII-VII in Figur 6,
Figur 8 eine Schnittansicht gemäß Figur 6 des in Figur 6 dargestellten Biegefederelements, wobei das Biegefederelement längs einer Verformungsrichtung zusammengedrückt ist, und
Figur 9 eine Schnittansicht durch das in Figur 8 dargestellte Biegefederelement längs einer Linie IX-IX in Figur 8.

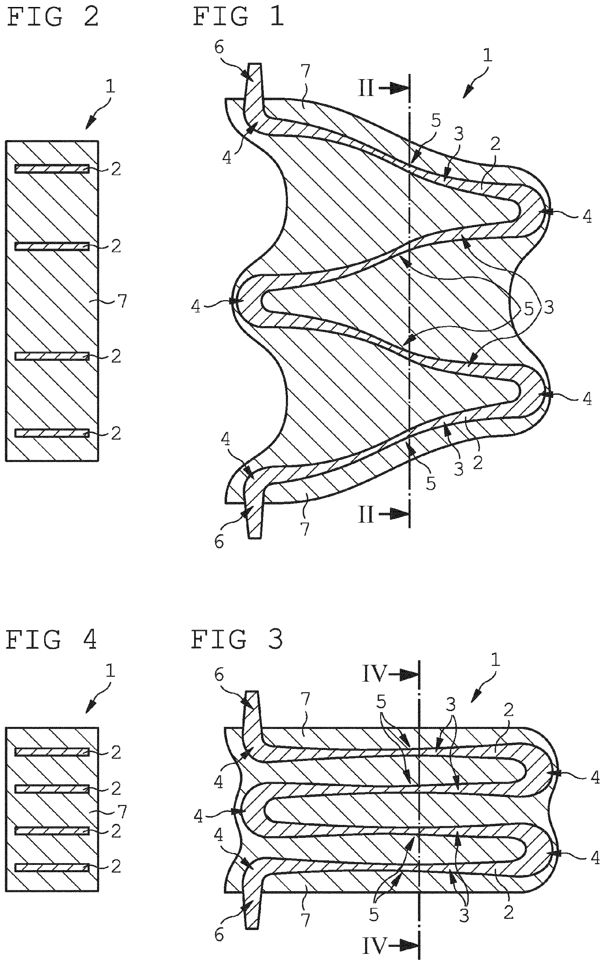

Ein in den Figuren 1 bis 4 exemplarisch dargestelltes Biegefederelement 1 weist einen mäanderförmig ausgebildeten Federkern 2 aus einem Faserkunststoffverbundmaterial auf.

Bei dem Faserkunststoffverbundmaterial kann es sich um ein hinsichtlich der jeweiligen Anforderungen in geeigneter Weise ausgewähltes, bzw. vorgegebenes Faserkunststoffverbundmaterial mit einem geeigneten Kunststoffmatrixmaterial und mit darin eingebetteten Fasern handeln. Die eingebetteten Fasern können beispielsweise Glasfasern oder Kohlenstofffasern sein, wobei auch andere Fasermaterialien wie beispielsweise Basaltfasern denkbar und geeignet sein können. Die Fasern können eine an die jeweiligen Anforderungen hinsichtlich der Herstellung und Verarbeitung des Federkerns 2 und den bei einer bestimmungsgemäßen Verwendung üblicherweise auftretenden mechanischen Belastungen aufweisen, wobei es sich sowohl um quasi Endlos-Fasern als auch um mittellange oder sogar kurze Fasern mit einer Faserlänge von einigen Zentimetern oder sogar einigen Millimetern und weniger handeln kann.

Der Federkern 2 des Biegefaserelements 1 weist vier jeweils in entgegengesetzter Richtung verlaufende Federschenkelabschnitte 3 auf, von denen jeweils zwei benachbarte Federschenkelabschnitte 3 über einen dazwischen angeordneten Umlenkungsbereich 4 miteinander verbunden sind. Die einzelnen Federschenkelabschnitte 3 weisen jeweils eine S-förmige Formgebung bzw. einen in einer Seitenansicht S-förmigen Verlauf auf. Die Federschenkelabschnitte 3 und die dazwischen angeordneten Umlenkungsbereiche 4 sind so ausgestaltet, dass bei einer bestimmungsgemäßen Belastung des Biegefederelements 1 in den Umlenkungsbereichen 4 keine nennenswerte Verformung stattfindet, und die Federschenkelabschnitte 3 in einem jeweils mittleren Bereich 5 verformt werden und dabei eine der von außen einwirkenden Belastung entgegengesetzte Federkraft erzeugen.

Derartige Biegefederelemente 1 können beispielsweise bei Fahrzeugen im Bereich der Radaufhängungen verwendet werden. Es sind auch andere Geometrien oder eine hiervon abweichend ausgestaltete Formgebung von Federkernen 2 bzw. Biegefederelementen 1 denkbar, beispielsweise gradlinig oder S-förmig verlaufende Federkerne 2 oder vergleichbar mäander-förmig ausgestaltete Federkerne 2, die mehr oder weniger jeweils entgegengesetzt ausgerichtete Federschenkelabschnitte 3 aufweisen.

An entgegengesetzten Enden des Federkerns 2 münden die jeweiligen Umlenkungsbereiche 4 jeweils in einen Lagerabschnitt 6, der für die Aufnahme und Festlegung des Federkerns 2 in einer daran angepassten Lagereinrichtung vorgesehen ist.

Der Federkern 2 wird im Wesentlichen vollständig, bzw. mit Ausnahme der Lagerabschnitte 6 von einer Umhüllung 7 umgeben. Die Umhüllung 7 schützt das Faserkunststoffverbundmaterial des Federkerns 2 vor Partikeln wie beispielsweise Schmutz oder Eis, die sich an einer Oberfläche des Faserkunststoffverbundmaterials anlagern könnten und bei einer länger andauernden Beanspruchung das Faserkunststoffmaterial schwächen oder beschädigen könnten. Die Umhüllung 7 schützt das Faserkunststoffverbundmaterial auch vor beispielsweise Steinschlag oder anderen mechanischen Einwirkungen von außen. Zudem schützt die Umhüllung 7 das Faserkunststoffverbundmaterial des Federkerns 2 vor einer Exposition gegenüber Sonnenlicht uns insbesondere gegenüber einer für die mechanische Festigkeit des Faserkunststoffverbundmaterials eventuell schädlichen UV-Strahlung.

Die Umhüllung 7 besteht aus einem geeigneten Umhüllungsmaterial, das bei dem exemplarisch dargestellten Ausführungsbeispiel ein geschlossenporiger Kunststoffschaum aus Polyurethan ist. Ein Elastizitätsmodul eines solchen Umhüllungsmaterials beträgt beispielsweise deutlich weniger als 0,01 GPa und damit deutlich weniger als 1% eines Elastizitätsmoduls des Faserkunststoffverbundmaterials, aus welchem der Federkern 2 hergestellt ist.

Dies führt dazu, dass die Federeigenschaften und insbesondere die bei einer belastungsbedingten Verformung des Federkerns 2 erzeugte Federkraft, die der Verformung des Federkerns 2 entgegenwirkt, im Wesentlichen ausschließlich durch den Federkern 2 bewirkt wird und im Gegensatz dazu die Umhüllung 7 keinen nennenswerten Einfluss auf die Federeigenschaften hat. Gleichwohl wird durch die Umhüllung 7 ein einfacher, kostengünstiger und sehr effektiver Schutz des Federkerns 2 des Biegefederelements 1 bewirkt. Das Biegefederelement 1 kann mit der Umhüllung 7 auch in anspruchsvollen Umgebungsbedingungen eingesetzt werden und eignet sich deshalb in besonderer Weise auch zur Verwendung beim Fahrzeugbau an exponierten Bereichen eines Fahrzeugs. Die Umhüllung 7 füllt zweckmäßigerweise auch Zwischenräume zwischen den einzelnen Federschenkelabschnitten 3 vollständig aus, sodass ein unerwünschtes Eindringen von Schmutzpartikeln oder anderen Partikeln zwischen einander zugewandten Oberflächen der Federschenkelabschnitte 3 in einfacher Weise ausgeschlossen werden kann.

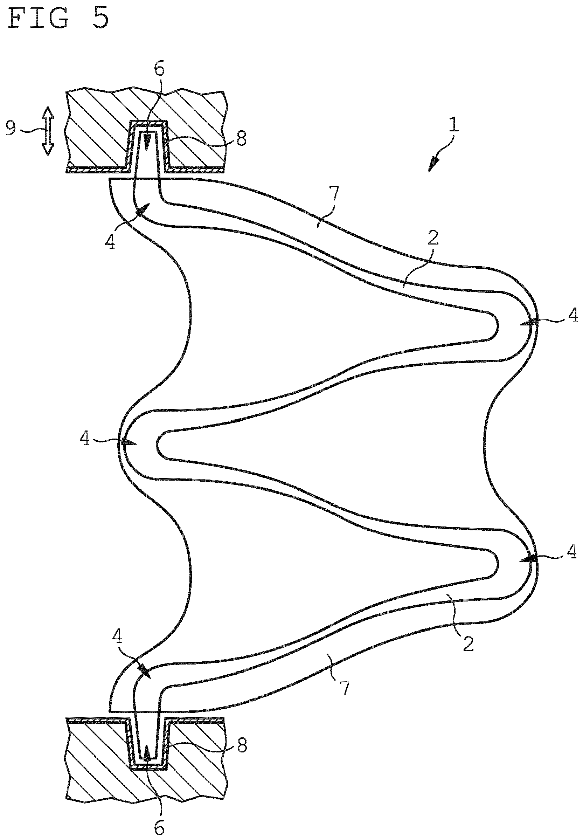

Figur 5 zeigt eine schematische Abbildung des in den Figuren 1 bis 4 dargestellten Biegefederelements 1, welches mit seinen beiden Lagerabschnitten 6 jeweils in einer daran angepasste Lageraufnahme 8 aufgenommen und festgelegt ist. Die Lageraufnahmen 8 sind einander gegenüberliegend angeordnet und ermöglichen eine Verlagerung der beiden Lagerabschnitte 6 in einer durch einen Pfeil 9 angedeuteten Verformungsrichtung relativ zueinander. Bei einer durch eine von außen einwirkende Belastung verursachte Verlagerung der beiden Lagerabschnitte 6 aufeinander zu wird das Biegefederelement 1 verformt, wodurch eine dieser Verformung entgegenwirkende Federkraft erzeugt wird.

Die Umhüllung 7 umgibt den Federkern 2 aus dem Kunststoffverbundmaterial bis zu den beiden Lagerabschnitten 6 und bildet in der Umgebung der Lageraufnahmen 8 eine Abdichtung der betreffenden Lageraufnahme 8, wodurch verhindert wird, dass in eventuelle Spalten und Schlitze zwischen den Lageraufnahmen 8 und den darin aufgenommenen Lagerabschnitten 6 des Federkerns 2 Schmutz oder andere Partikel oder aber Feuchtigkeit eindringen kann, welche die zuverlässige Aufnahmen des Biegefederelements 1 in den Lageraufnahmen 8 oder die Funktionsfähigkeit des Biegefederelements 1 beeinträchtigen könnten.

Bei einem abweichend zu dem in den Figuren 1 bis 5 ausgestalteten Biegefederelement 1 sind in den Umlenkungsbereichen 4 jeweils innen und außen Federverstärkungselemente 10 angeordnet. Die Federverstärkungselemente 10 bestehen aus einem Material mit einem deutlich höheren Elastizitätsmodul als das Umhüllungsmaterial der Umhüllung 7. Die Federverstärkungselemente 10 können beispielsweise aus Gummi oder aber beispielsweise aus einem geeigneten Kunststoffmaterial mit einem Elastizitätsmodul von mehr als 1 GPa bestehen. Auch andere Materialien mit einem hiervon abweichenden Elastizitätsmodul sind denkbar.

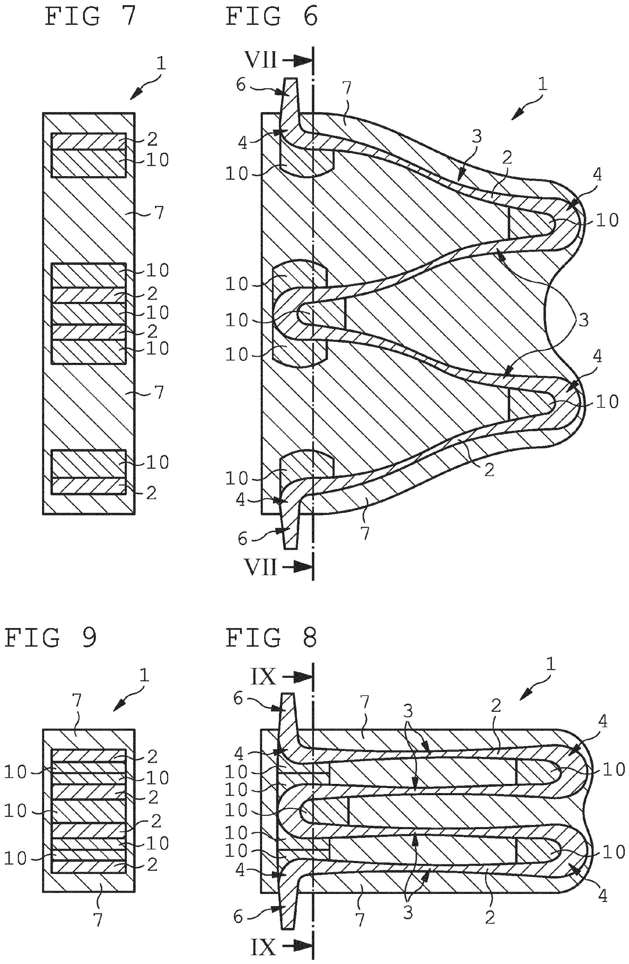

Die einzelnen Federverstärkungselemente 10 sind entlang der Umlenkungsbereiche 4, die entlang einer Linie zwischen den beiden Lageraufnahmen 8 liegen, außen und innen in den Umlenkungsbereichen 4 entlang der Verformungsrichtung 9 deckungsgleich, bzw. überlappend angeordnet. Bei einer belastungsbedingten Verformung des Biegefederelements 1, bei der die beiden Lagerabschnitte 6 entlang der Verformungsrichtung 9 aufeinander zu verlagert und das Biegefederelement 1 dadurch zusammengedrückt wird, liegen die Federverstärkungselemente 10 ab einer durch die Formgebung vorgegebenen Verformung aneinander an und werden zusätzlich zu dem Federkern 2 zusammengedrückt, wodurch sich die Federkraft erhöht und ein weiteres Zusammendrücken des Biegefederelements 1 zusätzlich erschwert wird. Sobald die Federverstärkungselemente 10 bei einer weiteren Verformung des Biegefederelements 1 merklich verformt werden, wie es in den Figuren 8 und 9 schematisch dargestellt ist, steigt die Federkraft deutlich an, ohne dass benachbarte Federschenkelabschnitte 3 oder Umlenkungsbereiche 4 aneinander anliegen.

Auf diese Weise kann beispielsweise ein unerwünschtes Aneinanderpressen von einander zugewandten Oberflächen des Federkerns 2 bzw. des Kunststoffverbundmaterials vermieden werden, ohne dass zusätzliche verformungsbegrenzende konstruktive Maßnahmen erforderlich werden oder das Biegefederelement 1 mit zusätzlichen Federeinrichtungen mit einer deutlich größeren rückstellenden Federkraft kombiniert werden muss. So könnte beispielsweise ein erfindungsgemäßen Biegefederelement 1 mit Federverstärkungselementen 10 und mit einer Umhüllung 7 im Bereich der Radaufhängung in einem Kraftfahrzeug eingesetzt werden, ohne dass ein zusätzlicher Dämpfer oder ergänzende Schutzmaßnahmen für das Biegefederelement 1 notwendig sind.

## Patentansprüche

1. Biegefederelement (1) mit einem Federkern (2) aus Faserkunststoffverbundmaterial, **dadurch gekennzeichnet, dass** das Faserkunststoffverbundmaterial mindestens abschnittsweise eine Umhüllung (7) aus einem Umhüllungsmaterial aufweist, dessen Elastizitätsmodul geringer als der Elastizitätsmodul des Faserkunststoffverbundmaterials ist.

2. Biegefederelement (1) nach Anspruch 1, **dadurch gekennzeichnet, dass** der Elastizitätsmodul des Umhüllungsmaterials weniger als 5 % und vorzugsweise weniger als 1 % des Elastizitätsmoduls des Faserkunststoffverbundmaterials beträgt.

3. Biegefederelement (1) nach Anspruch 1 oder Anspruch 2, **dadurch gekennzeichnet, dass** das Umhüllungsmaterial ein Kunststoffschaum ist.

4. Biegefederelement (1) nach Anspruch 3, **dadurch gekennzeichnet, dass** das Umhüllungsmaterial ein offenporiger Kunststoffschaum ist.

5. Biegefederelement (1) nach Anspruch 3, **dadurch gekennzeichnet, dass** das Umhüllungsmaterial ein geschlossenporiger Kunststoffschaum ist.

6. Biegefederelement (1) nach einem der vorangehenden Ansprüche, **dadurch gekennzeichnet, dass** das Umhüllungsmaterial ein Polyurethan-Schaum oder ein Polyurethan-Gel ist.

7. Biegefederelement (1) nach einem der vorangehenden Ansprüche, **dadurch gekennzeichnet, dass** das Biegefederelement (1) mindestens zwei in entgegengesetzter Richtung verlaufende Federschenkelabschnitte (3) aufweist, die über einen dazwischen angeordneten Umlenkungsbereich (4) verbunden sind, in welchem sich der Verlauf des Biegefederelements (1) verändert, sodass ein mäanderförmiges Biegefederelement (1) gebildet wird.

8. Biegefederelement (1) nach Anspruch 7, **dadurch gekennzeichnet, dass** ein Zwischenraum zwischen zwei in entgegengesetzter Richtung verlaufenden Federschenkelabschnitten (3) vollständig mit dem Umhüllungsmaterial ausgefüllt ist, sodass ein unerwünschtes Eindringen von Partikeln in diesen Zwischenraum verhindert werden kann.

9. Biegefederelement (1) nach einem der vorangehenden Ansprüche, **dadurch gekennzeichnet, dass** an dem Federkern (2) mehrere Federverstärkungselemente (10) derart angeordnet sind, dass sich bei einer bestimmungsgemäßen Verformung des Biegefederelements (1) die Federkraft erhöht.

10. Biegefederelement (1) nach Anspruch 10, **dadurch gekennzeichnet, dass** das Umhüllungsmaterial mehrere Bereiche mit einem höheren Elastizitätsmodul aufweist, wobei die mehreren Bereiche mit einem höheren Elastizitätsmodul jeweils ein Federverstärkungselement (10) bilden.

11. Biegefederelement (1) nach Anspruch 9 oder Anspruch 10, **dadurch gekennzeichnet, dass** mindestens an zwei in entgegengesetzter Richtung verlaufenden Federschenkelabschnitten (3) jeweils mindestens ein Federverstärkungselement (10) so angeordnet ist, dass bei einer bestimmungsgemäßen Verformung des Biegefederelements (1) die einander zugeordneten Federverstärkungselemente (10) an einander zugeordneten Federschenkelabschnitten (3) aneinander anliegen und die Federkraft bei einer weiteren Verformung des Biegefederelements (1) erhöhen.

12. Biegefederelement (1) nach einem der Ansprüche 9 bis 11, **dadurch gekennzeichnet, dass** mindestens an zwei bei einer bestimmungsgemäßen Verformung des Biegefederelements (1) benachbarten Umlenkungsbereichen (4) jeweils ein Federverstärkungselement (10) so angeordnet ist, dass bei einer bestimmungsgemäßen Verformung des Biegefederelements (1) die einander zugeordneten Federverstärkungselemente (10) an benachbarten Umlenkungsbereichen (4) aneinander anliegen und die Federkraft bei einer weiteren Verformung des Biegefederelements (1) erhöhen.

13. Biegefederelement (1) nach einem der Ansprüche 9 bis 12, **dadurch gekennzeichnet, dass** das Biegefederelement (1) mehr als zwei jeweils zueinander in entgegengesetzter Richtung verlaufende Federschenkelabschnitte (3) aufweist, und dass die an den Federschenkelabschnitten (3) und/oder an den Umlenkungsbereichen (4) angeordneten Federverstärkungselemente (10) in einer Verformungsrichtung jeweils überlappend oder deckungsgleich angeordnet sind, sodass bei einer ausreichenden Verformung des Biegefederelements (1) die längs der Verformungsrichtung angeordneten Federverstärkungselemente (10) unterbrechungsfrei aneinander anliegen.
